# EUROPEAN PATENT APPLICATION

(11) **EP 3 932 666 A1**
(43) Date of publication of application: **05.01.2022**
(21) Application number: 19917199.2
(22) Date of filing: 28.02.2019
(51) Int. Cl.: B32B 27/08, B32B 27/02, B32B 27/06, A47H 23/08, A47H 23/10

(54) **LIGHT-SHIELDING COMPOSITE FILM, MANUFACTURING METHOD THEREFOR AND USE THEREOF**

(71) Applicant: Jiangsu Junlin Textile Technology Ltd., Jiangsu 224100 (CN)
(72) Inventor: CHEN, Limin, Jiangyin Jiangsu 214445 (CN); YAN, Ruixiang, Yancheng Jiangsu 224100 (CN)
(74) Representative: Zimmermann, Tankred Klaus
(86) International application number: PCT/CN2019/076518
(87) International publication number: WO 2020/172860

(57) **Abstract**

A light blocking composite film and preparation method and use thereof. The light blocking composite film comprises a middle non-woven fabric layer, and at least one light-reflective layer and at least one light-absorptive layer alternately arranged on each side of the non-woven fabric layer, wherein the light-reflective layer is made of a resin containing light-reflective particles, and the light-absorptive layer is made of a resin containing light-absorptive particles. The light blocking composite film of the present invention has the advantages of good blocking, not easy to curl, good durability, light-weight structure, beautiful color and the like.

## Description

### Technical field

The present invention relates to the technical field of light blocking materials, and particularly relates to a light blocking composite film and a preparation method and use thereof.

### Background

In people's daily life, it is often required to control the brightness of rooms in home environment or in public buildings such as hotels, offices, conference rooms and the like, to reduce troubles caused by sunlight to the life and work.

In the places requiring more strict standards on light such as bedrooms, theaters, multimedia rooms, dark rooms and the like, full-blocking roller curtain fabrics are often required.

For light blocking curtain fabrics, not only aesthetics is required, but also a good blocking property against sunlight is required as a key indicator, and meanwhile good fastness properties are also necessary.

At present, most of full blocking fabrics on the market are generally treated by coating, but the coated fabrics are deteriorated in their drapability and air permeability, and the coating is easy to blister and fall off due to oxidation, affecting the blocking effect.

Due to the difference in the shell fabric material and the film material, the roller curtain fabrics on the market currently may curl in different directions under different temperature conditions, which affect the appearance and blocking of a roller curtain.

At present, various types of blocking roller curtains on the market have poor blocking properties. In order to achieve high blocking effects, methods of using a multi-layer roller curtain or thickening the material are mostly adopted. The production methods of these blocking roller curtains cannot meet the simple and lightweight trend as decorative textiles. To this end, it is a demand in the market to develop a good blocking, lightweight and simple blocking curtain.

### Summary of the invention

The present invention provides a light blocking composite film, a preparation method and use thereof, to improve the lightweight, durability and/or light blocking properties of the existing light blocking material.

To achieve the above object, according to one aspect of the present invention, there is provided a light blocking composite film comprising a middle non-woven fabric layer, and at least one light-reflective layer and at least one light-absorptive layer on each side of the non-woven fabric. The light-reflective layer and the light-absorptive layer on each side are alternately arranged, wherein the light-reflective layer is made of a resin containing light-reflective particles, and the light-absorptive layer is made of a resin containing light-absorptive particles. Preferably, the non-woven fabric has an areal density of less than 20 g/m² and a thickness of 0.05-0.15 mm.

In some embodiments, the thickness of the light blocking composite film is 0.05-1.0 mm (for example, 0.1 mm, 0.3 mm, 0.5 mm, 0.7 mm or 0.9 mm), and the areal density is 50-100 g/m² (for example, 60 g/m², 70 g/m², 80 g/m² or 90 g/m²).

In some embodiments, the thicknesses of each layer in the light blocking composite film are identical.

In some embodiments, the light-reflective particles are prepared by mixing 65-75 parts by weight of a light-reflective material, 0.5-1.5 parts by weight of a dispersant, and 24-34 parts by weight of a resin; and the light-absorptive particles are prepared by mixing 10-15 parts by weight of a light-absorptive material, 0.5-2 parts by weight of a dispersant, and 84-89 parts by weight of a resin.

In some embodiments, the content of the light-reflective particles in the light-reflective layer is 30.0-40.0 wt% (for example, 31.0 wt%, 32.0 wt%, 33.0 wt%, 34.0 wt%, 35.0 wt%, 36.0 wt%, 37.0 wt%, 38.0 wt% or 39.0 wt%), and the content of the resin in the light-reflective layer is 59.0-69.0 wt% (for example, 60.0 wt%, 61.0 wt%, 62.0 wt%, 63.0 wt%, 64.0 wt%, 65.0 wt%, 66.0 wt%, 67.0 wt% or 68.0 wt%), and the content of the dispersant is 0.5-1.5 wt% (for example, 0.6 wt%, 0.7 wt%, 0.8 wt%, 0.9 wt%, 1.0 wt%, 1.1 wt%, 1.2 wt%, 1.3 wt% or 1.4 wt%).

In some embodiments, the content of the light-absorptive particles in the light-absorptive layer is 25-35 wt% (for example, 26.0 wt%, 27.0 wt%, 28.0 wt%, 29.0 wt%, 30.0 wt%, 31.0 wt%, 32.0 wt%, 33.0 wt% or 34.0 wt%), and the content of the resin in the light-absorptive layer is 64.0-74.0 wt% (for example, 65.0 wt%, 66.0 wt%, 67.0 wt%, 68.0 wt%, 69.0 wt%, 70.0 wt%, 71.0 wt%, 72.0 wt% or 73.0 wt%), and the content of the dispersant is 0.5-1.5 wt% (for example, 0.6 wt%, 0.7 wt%, 0.8 wt%, 0.9 wt%, 1.0 wt%, 1.1 wt%, 1.2 wt%, 1.3 wt% or 1.4 wt%).

In some embodiments, the light-reflective material is selected from one of the group consisting of titanium dioxide and barium sulfate, or a combination thereof.

In some embodiments, the light-absorptive material is selected from one or more of the group consisting of carbon black, iron black and graphite.

In some embodiments, the particle size of the light-reflective material and the light-absorptive material is 0.1-1 µm.

For the purpose of dispersion stability, the light-reflective material and the light-absorptive material may be subjected to a surface modification treatment to increase their compatibility with the resin.

In some embodiments, the resin is selected from one or more of the group consisting of polyethylene (PE), polyethylene terephthalate (PET), polytrimethylene terephthalate (PTT), ethylene-vinyl acetate copolymer (EVA), thermoplastic elastomer (TPE), thermoplastic polyurethane elastomer (TPU) and polyolefin elastomer (POE).

In some embodiments, the material of the non-woven fabric is selected from one or more of the group consisting of polypropylene (PP), polyethylene terephthalate (PET), polytrimethylene terephthalate (PTT) and polyamide (PA).

In some embodiments, the dispersant is ethylhexyl benzoate (EHBA). Ethylhexyl benzoate (EHBA) can improve the dispersion stability of the light-reflective material and the light-absorptive material in the resin system and reduce the agglomeration of the particles.

According to another aspect of the present invention, there is provided a method for preparing the light blocking composite film, comprising the following steps:
S1. Preparing the light-reflective particles and the light-absorptive particles;
S2. adding the light-reflective particles and the light-absorptive particles into the resin respectively and well mixing to form a film by co-extrusion molding. Preferably, the mass ratio of the light-reflective particles to the resin is (34-40):(59-69); and the mass ratio of the light-absorptive particles to the resin is (10-15): (84-89);
S3. hot-pressing two of the films and a non-woven fabric to form the light blocking composite film..

In a further aspect, the present invention also relates to use of the light blocking composite film.

The present invention provides a light blocking fabric comprising the light blocking composite film and a shell fabric adhered to the surface of one or both of the light blocking composite film, wherein the material of the shell fabric is identical to that of the non-woven fabric in the light blocking composite film.

In some embodiments, the shell fabric is a woven fabric, a knitted fabric or a non-woven fabric.

In some embodiments, the light blocking fabric is formed by laminating the light blocking composite film and the shell fabric using a hot-melt adhesive.

In addition, the present invention also provides a curtain-like article comprising the light blocking fabric.

Compared with the prior art, the present invention has the following beneficial effects:
(1) The preparation method of the present invention is simple, low in cost, high in production efficiency, and easy to industrialized production;
(2) The resin raw material of the present invention has wide sources and is easy to be processed into various shapes, and is convenient to use;
(3) The light blocking composite film of the present invention has the advantages of high blocking property, not easy to curl, good durability, light-weight structure, beautiful color and the like, and can meet the requirements of current high-grade curtain materials;
(4) The full-blocking roller curtain of the present invention has a good blocking effect, and can be applied to interior decoration fields such as home furnishings, hospital wards, automobile interior decoration and aircraft interior decoration, and has a broad application prospect and a market prospect.

### Brief description of the figures

FIG. 1 is a light blocking composite film according to an example of the present invention;
FIG. 2 is a light blocking composite film in another example of the present invention;
FIG. 3 is a T-shaped mold forming process in an example of the present invention;
FIG. 4 is a single-line mold forming process in an example of the present invention;
FIG. 5 is a light blocking fabric according to an example of the present invention;
FIG. 6 is a light blocking fabric according to another example of the present invention.

### Detailed description

In order to make the objects, technical solutions, and advantages of the present invention clear the present invention is further described in detail in combination with specific examples and with reference to the figures.

### Preparation of the light blocking composite film

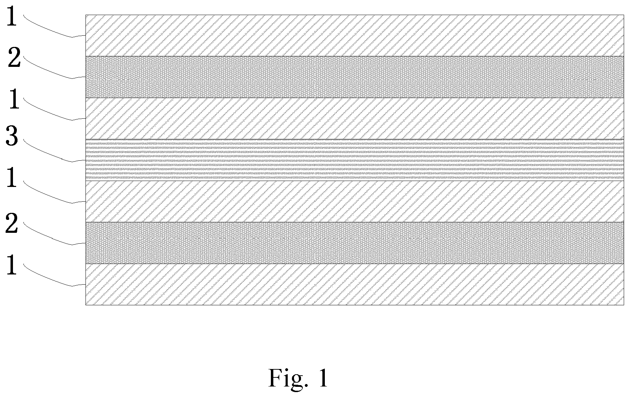

As shown in FIG. 1, in an embodiment of the present invention, there is provided a light blocking composite film having a multilayer structure comprising a light-reflective layer 1-a light-absorptive layer 2-a light-reflective layer 1-a non-woven fabric 3- a light-reflective layer 1-a light-absorptive layer 2-a light-reflective layer 1 (the outer light-reflective layer 1 may contain pigment to exhibit a required color). The present invention adopts a processing method of extrusion molding to form a seven-layer blocking polymer film comprising a light-reflective layer-a light-absorptive layer-a light-reflective layer-a non-woven fabric-a light-reflective layer-a light-absorptive layer-a light-reflective layer. Compared with a three-layer film structure comprising a light-reflective layer-a light-absorptive layer-a light-reflective layer, the seven-layer polymer film has better blocking effect, and a white or multi-color visual effect on both sides of the light blocking composite film is ensured at the same time. The six-layer composite blocking polymer film and one layer of non-woven fabric are hot-pressed into a light blocking composite film through a hot-pressing process, and the thickness is controlled at 0.05-1.0 mm. Preferably, the thicknesses of each layer are identical.

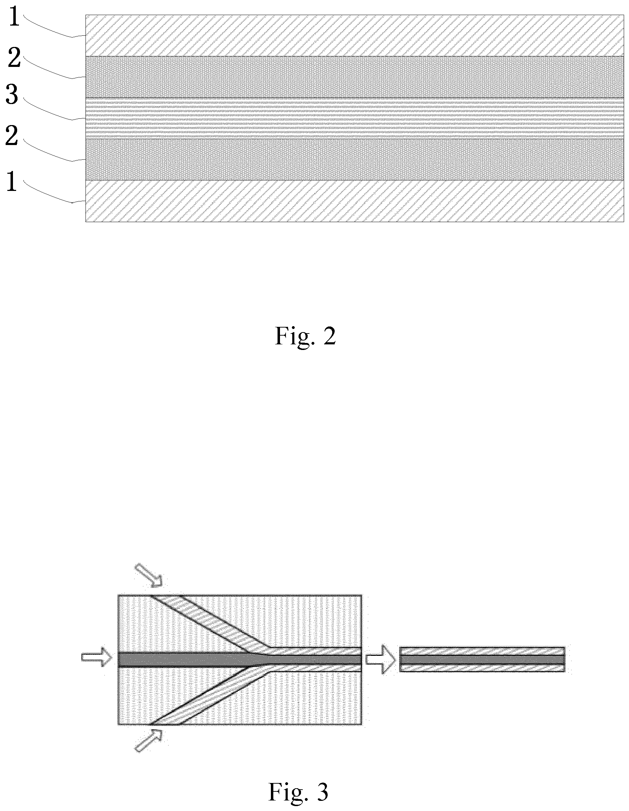

As shown in FIG. 2, a light blocking composite film provided in another embodiment of the present invention has a multilayer structure comprising a light-reflective layer 1-a light-absorptive layer 2-a non-woven fabric 3- a light-absorptive layer 2-a light-reflective layer 1.

If the color of the light blocking composite film is black, the light-absorptive layer 2 can be located at the outermost layer of the light blocking composite film.

The preparation method of the light blocking composite film of the present invention comprises:
(1) after adding titanium dioxide or high black carbon black powder with a certain particle size (for example, 0.1-1 µm) respectively into EHBA (an environmentally friendly organic ester dispersant) and mixing homogenously by stirring, adding a resin (such as polyethylene (PE), polyethylene terephthalate (PET), polytrimethylene terephthalate (PTT), ethylene-vinyl acetate copolymer (EVA), thermoplastic elastomer (TPE), thermoplastic polyurethane elastomer (TPU) and polyolefin elastomer (POE) resin), stirring the mixture, and granulating with a twin-screw granulator to obtain white light-reflective particles or black light-absorptive particles, wherein the resin in the white light-reflective particles is the same as that in the light-reflective layer, and the resin in the black light-absorptive particles is the same as that in the light-absorptive layer.
(2) adding the light-reflective particles or the light-absorptive particles respectively into a raw material resin such as polyethylene (PE), polyethylene terephthalate (PET), polytrimethylene terephthalate (PTT), ethylene-vinyl acetate copolymer (EVA), thermoplastic elastomer (TPE), thermoplastic polyurethane elastomer (TPU) and polyolefin elastomer (POE) and the like, preferably with a dispersant EHBA, adding into different three-screw extruders (or twin-screw extruders) after well mixing, extruding and hot-pressing with a three-input co-extrusion T-shape mold (or a two-input co-extrusion single-line mold) to obtain a film; and controlling the film thickness to 0.3-0.4 mm through post-processing. The film and the non-woven fabric unrolled in the same direction are hot-pressed under the condition of a certain temperature and a certain pressure to form a blocking film comprising a film on single side of the non-woven fabric, which is subsequently rolled.

An integrated blocking film structure comprising a middle non-woven fabric layer and films on both sides thereof is then formed by hot-pressing using the same method and subsequently rolled.
wherein, the material of the non-woven fabric is one or more selected from the group consisting of polypropylene (PP), polyethylene terephthalate (PET), polytrimethylene terephthalate (PTT), and polyamide (PA).

In some embodiments, the light-reflective particles and the light-absorptive particles are prepared by the following steps:
Adding 1.0 part by weight of an environmentally friendly organic ester dispersant EHBA into 70.0 parts by weight of titanium dioxide with a particle size of 0.7 µm, well mixing, adding 29.0 parts by weight of dried PE resin, stirring the mixture, and granulating with a twin-screw granulator to obtain the light-reflective white particles.

Adding 1.0 parts by weight of an environmentally friendly organic ester dispersant EHBA into 12.0 parts by weight of high black carbon black powder with a particle size of 0.5 µm, well mixing, adding 87.0 parts by weight of dried PE resin, stirring the mixture, and granulating with a twin-screw granulator to obtain the light-absorptive black particles.

### Example 1

The dried PE resin raw material was mixed with the light-reflective particles and the light-absorptive particles, respectively, wherein the weight ratio of the PE resin to the light-reflective particles was 64:35, and the weight ratio of the PE resin to the light-absorptive particles was 69:30, and then 1.0 parts by weight of a dispersant EHBA was added. After well mixing, the mixtures were added into a three-screw extruder, ensuring that the light-reflective particle mixed resin, light-absorptive particle mixed resin, and light-reflective particle mixed resin were respectively guided to the upper, middle and lower layers of the mouth of the extrusion mold, as shown in FIG. 3.

The temperature of the three-screw extruder was controlled so that the temperature in the feed heating region was 30°C higher than the melting point of the resin, and the temperature of the three-input co-extrusion T-shape mold was controlled to be 25°C higher than the melting point.

The film extruded by the three-input co-extrusion T-shape mold was stretched to a thickness of 0.3 mm and then rolled.

The film and a PET non-woven fabric unrolled in the same direction were hot-pressed under a condition of a certain temperature and pressure with a hot-pressing roller to form a blocking film with a thickness of 0.4 mm comprising a film on single side of the non-woven fabric, which was subsequently rolled.

An integrated blocking film structure with a thickness of 0.7 mm comprising a middle non-woven fabric layer and films on both sides thereof was then formed by hot-pressing using the same method and subsequently rolled.

### Example 2

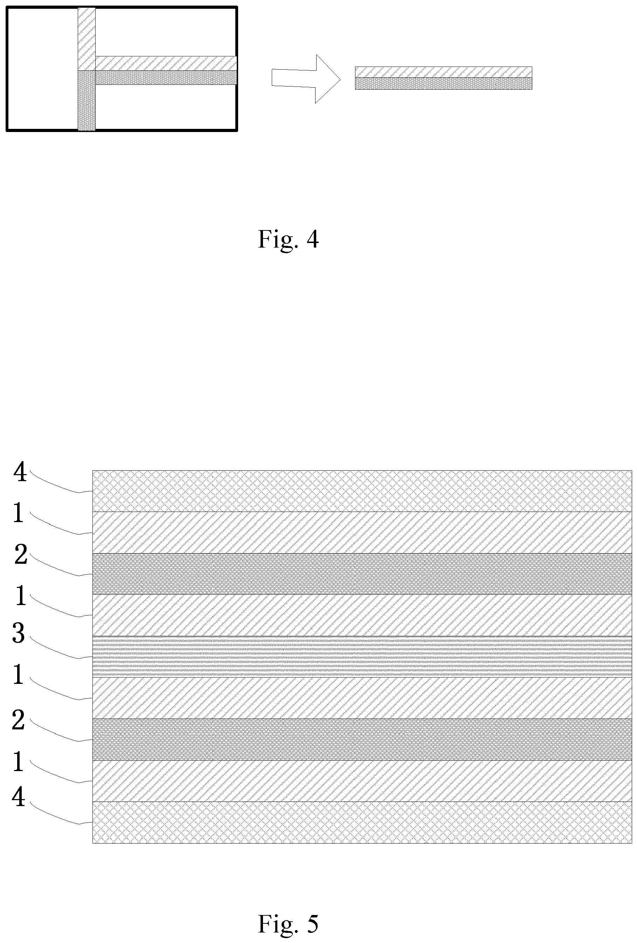

The dried PE resin raw material was mixed with the light-reflective particles and the light-absorptive particles, respectively, wherein the weight ratio of the PE resin to the light-reflective particles was 70:29, and the weight ratio of the PE resin to the light-absorptive particles was 64:35, and then 1.0 parts by weight of a dispersant EHBA was added. After well mixing, the mixtures were added into a twin-screw extruder, ensuring that the light-reflective particle mixed resin and the light-absorptive particle mixed resin were respectively guided to the upper and lower layers of the mouth of the extrusion mold, as shown in FIG. 4.

The temperature of the twin-screw extruder was controlled so that the temperature in the feed heating region was 30°C higher than the melting point of the resin, and the temperature of the two-input co-extrusion single-line mold was controlled to be 25°C higher than the melting point.

The film extruded by the two-input co-extrusion single-line mold was stretched to a thickness of 0.3 mm.

The film and a PET non-woven fabric unrolled in the same direction were hot-pressed under a condition of a certain temperature and pressure with a hot-pressing roller to form a blocking film with a thickness of 0.4 mm comprising a film on single side of the non-woven fabric, which was subsequently rolled.

An integrated blocking film structure with a thickness of 0.7 mm comprising a middle non-woven fabric layer and films on both sides thereof was then formed by hot-pressing using the same method and subsequently rolled.

### Comparative Example 1

The dried PE resin raw material was mixed with the light-reflective particles and the light-absorptive particles, respectively, wherein the weight ratio of the PE resin to the light-reflective particles was 64:35, and the weight ratio of the PE resin to the light-absorptive particles was 69:30, and then 1.0 parts by weight of a dispersant EHBA was added. After well mixing, the mixtures were added into a three-screw extruder, ensuring that the light-reflective particle mixed resin was guided to the upper and lower regions of mouth of the extrusion mold, while the light-absorptive particle mixed resin was guided to the middle region of the extrusion mold.

The temperature of the three-screw extruder was controlled so that the temperature in the feed heating region was 30°C higher than the melting point of the resin, and the temperature of the three-input co-extrusion T-shape mold was controlled to be 25°C higher than the melting point.

The film extruded by the three-input co-extrusion T-shape mold was stretched to a thickness of 0.7 mm and then rolled.

Light blocking properties inspection was performed under the JISL1055 standard, and the light blocking rate is required to be 100%.

### Preparation of light blocking fabric

The bonding technology of a film material with a textile fabric is the leading technology to achieve the functionalization of textile, and a moisture curing reactive type polyurethane hot melt adhesive becomes the most popular adhesive in the laminating composite industry, with a feature of no pollution to the environment. To produce a composite textile fabric having a light blocking function of the present invention, hot melting composite technology is adopted, which conforms to the direction of development with environmental protection.

Preparation of composite textile fabrics with blocking function by hot-melting composite:
Hot-melt lamination is performed on one or both sides of the light blocking composite film using hot-melting adhesive and hot-rolling lamination technology, and the textile is thermally adhered to one or both sides of the light blocking composite film to obtain a textile fabric with a certain flatness, fastness and full blocking properties; wherein the textile material used here has the same fiber material as the non-woven fabric in the light blocking composite film or thin woven fabric. The organization structure of the textile may be woven fabric, knitted fabric, or non-woven fabric.

By choosing a textile of the same material as the non-woven fabric or thin woven fabric as the composite material, it is possible to ensure that the thermal deformation temperatures of the textile and the light blocking composite film are consistent under certain temperature conditions so that no curling occurs after lamination.

The specific preparation process of the light blocking fabric comprises:
First, performing a preliminary corona surface treatment on the light blocking composite film to change the surface chemical structure of the film, increase the surface tension of the blocking film, increase adhesion points, and improve fastness.
Second, melting a moisture curing reactive type polyurethane hot melt adhesive at 90-110°C, injecting it into a thermal laminating machine to laminate a surface of the light blocking composite film with a shell fabric 4, curing for 24 h, and performing the same lamination between another surface of the light blocking composite film and a shell fabric 4 to thermally bond the light blocking composite film between two layers of shell fabric 4 and form a light blocking fabric with a resultant structure as shown in FIG. 5.

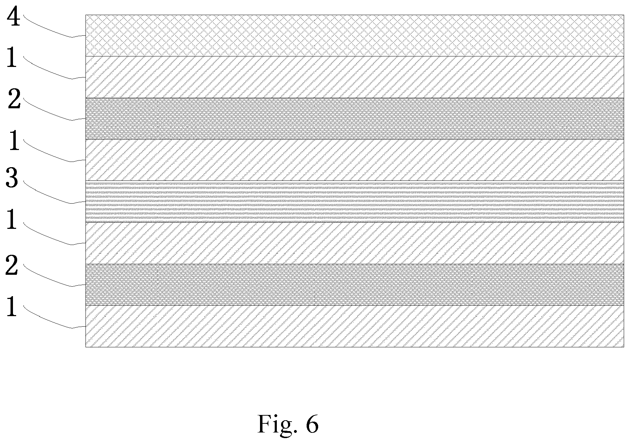

In some embodiments, the same thermal lamination can be performed on only one surface of the full-light blocking composite film and a textile, as shown in FIG. 6.

### Example 3

In this example, the light blocking composite film in Example 1 is used to prepare a double-sided composite light blocking fabric having PET fabrics on both sides of the light blocking composite film. The preparation method comprises:
First, performing a preliminary corona surface treatment on the light blocking composite film in Example 1;
Second, melting a moisture curing reactive type polyurethane hot melt adhesive at 95°C, injecting it into a thermal laminating machine to laminate a surface of the light blocking composite film with a PET fabric, and curing for 24 h;
Third, laminating another surface of the light blocking composite film with a PET fabric using the moisture curing reactive type polyurethane hot melt adhesive, and curing for 24 h to obtain a double-sided composite light blocking fabric.

### Example 4

In this example, the light blocking composite film in Example 1 is used to prepare a light blocking fabric having PET fabrics laminated on single side of the light blocking composite film. The preparation method comprises:
First, performing a preliminary corona surface treatment on the light blocking composite film in Example 1;
Second, melting a moisture curing reactive type polyurethane hot melt adhesive at 95 °C, injecting it into a thermal laminating machine to laminate a surface of the light blocking composite film with a PET fabric, and curing for 24 h to obtain a light blocking fabric.

### Example 5

In this example, the light blocking composite film in Example 2 is used to prepare a light blocking fabric having PET fabrics laminated on both sides of the light blocking composite film. The preparation method comprises:
First, performing a preliminary corona surface treatment on the light blocking composite film in Example 2;
Second, melting a moisture curing reactive type polyurethane hot melt adhesive at 95 °C, injecting it into a thermal laminating machine to laminate a surface of the light blocking composite film with a PET fabric, and curing for 24 h.
Third, laminating another surface of the light blocking composite film with a PET fabric using the moisture curing reactive type polyurethane hot melt adhesive, and curing for 24 h to obtain a double-sided composite light blocking fabric.

### Comparative Example 2

The method was the same as in Example 3 except that fabric in Example 3 was replaced with polyamide PA.

### Comparative Example 3

The method was the same as in Example 3 except that the light blocking composite film in Example 3 was replaced with the light blocking composite film in Comparative Example 1.

| 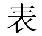 1 | | | | | | |
|---|---|---|---|---|---|---|
| | temperature (°C) | Humidity RH% | Blocking rate | Degree of curling | Curling direction | results |
| Example 3 | 15 | 65 | 100% | 0.4% | Shell fabric | qualified |
| | 20 | 65 | 100% | 0.2% | shell fabric | |
| | 25 | 65 | 100% | 0% | shell | |
| | | | | | fabric | |
| | 30 | 65 | 100% | 0.1% | shell fabric | |
| | 35 | 65 | 100% | 0.2% | shell fabric | |
| Example 4 | 15 | 65 | 100% | 1.0% | shell fabric | qualified |
| | 20 | 65 | 100% | 0.4% | shell fabric | |
| | 25 | 65 | 100% | 0% | shell fabric | |
| | 30 | 65 | 100% | 0.2% | film | |
| | 35 | 65 | 100% | 0.4% | film | |
| Example 5 | 15 | 65 | 100% | 0.6% | shell fabric | qualified |
| | 20 | 65 | 100% | 0.3% | shell fabric | |
| | 25 | 65 | 100% | 0% | shell fabric | |
| | 30 | 65 | 100% | 0.3% | shell fabric | |
| | 35 | 65 | 100% | 0.5% | shell fabric | |
| Comparative example 2 | 15 | 65 | 100% | 4.2% | shell fabric | unqualified |
| | 20 | 65 | 100% | 2.6% | shell fabric | |
| | 25 | 65 | 100% | 1.4% | shell fabric | |
| | 30 | 65 | 100% | 0.5% | shell fabric | |
| | 35 | 65 | 100% | 3.0% | shell fabric | |
| Comparative example 3 | 15 | 65 | 100% | 4.5% | shell fabric | unqualified |
| | 20 | 65 | 100% | 3.6% | shell fabric | |
| | 25 | 65 | 100% | 2.9% | shell fabric | |
| | 30 | 65 | 100% | 1.5% | shell fabric | |
| | 35 | 65 | 100% | 2.3% | shell fabric | |

Note: The width of the light blocking fabric is set to 100 cm, and the light blocking composite film is qualified if the degree of curling thereof is within 2%.

It can be known from Table 1 that when the light blocking composite film does not comprises a middle non-woven fabric layer(Comparative Example 3), the light blocking fabric will obviously curl during temperature change, while the degree of curling of the light blocking composite film of the present invention can be significantly reduced. In addition, when the material of the light blocking composite film is different from that of the shell fabric (Comparative Example 2), the light blocking shell fabric shows obvious curl, which is due to the different thermal deformation temperature of the light blocking composite film and the shell fabric.

### Preparation of light blocking roller curtain

On the basis of the above described full blocking functional composite textile fabric, conventional tailoring and sewing methods are used to produce curtains of different structures and forms.

The full blocking non-curling roller curtain obtained by the above technical solutions in the present invention achieves its high blocking property and flatness through lamination of the light blocking composite film with a fabric.

The foregoing embodiments give further detailed description of the objects, technical solutions and advantages of the present invention. It is to be understood that the foregoing description is only illustrative for the specific embodiments of the present invention and is not intended to limit the present invention. Any modifications, equivalent substitutions, modifications, and the like made within the spirit and principles of the present invention are intended to be included within the scope of the present invention.

## Claims

1. A light blocking composite film, comprising a middle non-woven fabric layer, and at least one light-reflective layer and at least one light-absorptive layer alternately arranged on each side of the non-woven fabric, wherein the light-reflective layer is made of a resin containing light-reflective particles, and the light-absorptive layer is made of a resin containing light-absorptive particles, preferably, the non-woven fabric has an areal density of less than 20 g/m² and a thickness of 0.05-0.15 mm.

2. The light blocking composite film of claim 1, wherein the thickness of the light blocking composite film is 0.05-1.0 mm (for example, 0.1 mm, 0.3 mm, 0.5 mm, 0.7 mm or 0.9 mm), and the areal density is 50-100 g/m² (for example, 60 g/m², 70 g/m², 80 g/m² or 90 g/m²), preferably, the thicknesses of each layer in the light blocking composite film are identical.

3. The light blocking composite film of claim 1, wherein the light-reflective particles are prepared by mixing 65-75 parts by weight of a light-reflective material, 0.5-1.5 parts by weight of a dispersant, and 24-34 parts by weight of a resin, and the light-absorptive particles are prepared by mixing 10-15 parts by weight of a light-absorptive material, 0.5-2 parts by weight of a dispersant, and 84-89 parts by weight of a resin, preferably, the dispersant is ethylhexyl benzoate (EHBA).

4. The light blocking composite film of claim 1, wherein the content of the light-reflective particles in the light-reflective layer is 30.0-40.0 wt% (for example, 31.0 wt%, 32.0 wt%, 33.0 wt%, 34.0 wt%, 35.0 wt%, 36.0 wt%, 37.0 wt%, 38.0 wt% or 39.0 wt%), and the content of the resin in the light-reflective layer is 59.0-69.0 wt% (for example, 60.0 wt%, 61.0 wt%, 62.0 wt%, 63.0 wt%, 64.0 wt%, 65.0 wt%, 66.0 wt%, 67.0 wt% or 68.0 wt%), and the content of the dispersant is 0.5-1.5 wt% (for example, 0.6 wt%, 0.7 wt%, 0.8 wt%, 0.9 wt%, 1.0 wt%, 1.1 wt%, 1.2 wt%, 1.3 wt% or 1.4 wt%), preferably, the dispersant is ethylhexyl benzoate (EHBA).

5. The light blocking composite film of claim 1, wherein the content of the light-absorptive particles in the light-absorptive layer is 25-35 wt% (for example, 26.0 wt%, 27.0 wt%, 28.0 wt%, 29.0 wt%, 30.0 wt%, 31.0 wt%, 32.0 wt%, 33.0 wt% or 34.0 wt%), and the content of the resin in the light-absorptive layer is 64.0-74.0 wt% (for example, 65.0 wt%, 66.0 wt%, 67.0 wt%, 68.0 wt%, 69.0 wt%, 70.0 wt%, 71.0 wt%, 72.0 wt% or 73.0 wt%), and the content of the dispersant is 0.5-1.5 wt% (for example, 0.6 wt%, 0.7 wt%, 0.8 wt%, 0.9 wt%, 1.0 wt%, 1.1 wt%, 1.2 wt%, 1.3 wt% or 1.4 wt%), preferably, the dispersant is ethylhexyl benzoate (EHBA).

6. The light blocking composite film of claim 1, wherein the light-reflective material is selected from one of titanium dioxide and barium sulfate, or a combination thereof, and the light-absorptive material is selected from one or more of the group consisting of carbon black, iron black and graphite, preferably, the particle size of the light-reflective material and the light-absorptive material is 0.1-1 µm.

7. The light blocking composite film of claim 1, wherein the resin is selected from one or more of the group consisting of polyethylene (PE), polyethylene terephthalate (PET), polytrimethylene terephthalate (PTT), ethylene-vinyl acetate copolymer (EVA), thermoplastic elastomer (TPE), thermoplastic polyurethane elastomer (TPU) and polyolefin elastomer (POE), preferably, the material of the non-woven fabric is selected from one or more of the group consisting of polypropylene (PP), polyethylene terephthalate (PET), polytrimethylene terephthalate (PTT) and polyamide (PA).

8. A method for preparing the light blocking composite film according to any one of claims 1 to 7, comprising the following steps:
S1. preparing the light-reflective particles and the light-absorptive particles;
S2. adding the light-reflective particles and the light-absorptive particles into the resin respectively and well mixing to form a film by co-extrusion molding, preferably, the mass ratio of the light-reflective particles to the resin is (34-40):(59-69); and the mass ratio of the light-absorptive particles to the resin is (10-15): (84-89);
S3. hot-pressing two of the films and a non-woven fabric to form the light blocking composite film.

9. A light blocking fabric comprising the light blocking composite film according to any one of claims 1 to 7 and a shell fabric adhered to one or both surfaces of the light blocking composite film, wherein the material of the shell fabric is identical to that of the non-woven fabric in the light blocking composite film, preferably, the shell fabric is a woven fabric, a knitted fabric or a non-woven fabric, preferably, the light blocking fabric is formed by laminating the light blocking composite film and the shell fabric using a hot-melt adhesive.

10. A curtain-like article, comprising the light blocking fabric according to claim 9.
